Europäisches Patentamt

European Patent Office

Office européen des brevets

(19)

Veröffentlichungsnummer: **0 292 615**
**A2**

## EUROPÄISCHE PATENTANMELDUNG

(21) Anmeldenummer: 87118991.6

(22) Anmeldetag: 21.12.87

(51) Int. Cl.⁴ **B29C 45/14 , B65D 59/02**

(30) Priorität: 26.05.87 DE 3717750

(43) Veröffentlichungstag der Anmeldung:
30.11.88 Patentblatt 88/48

(84) Benannte Vertragsstaaten:
AT CH FR GB LI SE

(71) Anmelder: REHAU AG + Co
Rheniumhaus
D-8673 Rehau(DE)

(72) Erfinder: Der Erfinder hat auf seine Nennung
verzichtet

(54) Verfahren zum Einspritzen eines elastischen Dichtringmaterials in die Ringnut einer Verbindungsmuffe.

(57) Die Erfindung betrifft ein Verfahren zum Einspritzen eines elastischen Dichtungsmaterials in die Ringnut einer Verbindungsmuffe an Rohren oder Formteilen aus Polymeren. Die Ringnut ist dabei mit Einspritz- und Entlüftungsöffnungen versehen und vor dem Einspritzen des Dichtungsmaterials ist in die Verbindungsmuffe eine die innere Kontur des Dichtringes bestimmende, teilbare Kernform eingebracht. Das kennzeichnende der Erfindung wird darin gesehen, daß auf den Außenumfang der Kernform vor deren Einbringen in die Verbindungsmuffe eine Hülle aus polymerem Material aufgebracht wird. Diese Hülle bewirkt die Abdichtung zur Ringnut. Sie verbleibt während, bzw. nach dem Entfernen der Kernform aus der Verbindungsmuffe in ihrer Ursprungslage als temporärer Muffeneinsatz. Die Hülle ermöglicht das Entfernen der teilbaren Kernform aus der Verbindungsmuffe direkt nach dem Einspritzen des Dichtungsmaterials noch vor dessen Aushärtung und bewirkt einen Schutz des sensiblen Bereichs im Inneren der Verbindungsmuffe vor beispielsweise Verschmutzung bis unmittelbar vor dem Verbinden mit dem Einschubende eines Rohres.

# VERFAHREN ZUM EINSPRITZEN EINES ELASTISCHEN DICHTRINGMATERIALS IN DIE RINGNUT EINER VERBINDUNGSMUFFE

Die Erfindung betrifft ein Verfahren zum Einspritzen eines elastischen Dichtringmaterials in die Ringnut einer Verbindungsmuffe an Rohren oder Formteilen aus Polymeren, wobei die Ringnut mit Einspritz- und Entlüftungsöffnungen versehen ist und wobei vor dem Einspritzen des Dichtringmaterials in die Ringnut eine die innere Kontur des Dichtrings bestimmende, teilbare Kernform in die Verbindungsmuffe eingebracht wird.

Aus dem DE-O 85 11 871.0 ist ein Muffenrohr bekannt geworden, welches an der Muffe eine umlaufende Sicke für die Aufnahme eines Dichtungselementes besitzt. In der Sickenwand dieser Muffe ist wenigstens eine Öffnung angeordnet, durch welche ein Dichtungsmittel in die Ringnut der Sicke eingespritzt werden kann. Die Ringnut der Sicke wird dabei nach innen hin durch das eingeschobene Spitzende eines Rohres abgedeckt. Das eingespritzte Dichtmittel wirkt bei dieser Ausführungsart als abdichtende Verklebung zwischen dem Außenumfang des in die Rohrmuffe eingeschobenen Spitzendes und den zugeordneten inneren Umfangsflächen der Rohrmuffe.

Aus der DE-OS 28 45 308 ist ein Fitting aus formstabilem Kunststoff bekannt geworden, welcher aus formfest aushärtendem Kunststoff besteht. In diesen Fitting wird unmittelbar nach Abschluß seines Formprozesses ein Dichtungsring aus formelastisch aushärtendem Kunststoff eingespritzt. Dies wird durch die Verwendung einer Außenform und einer Kernform ermöglicht. Die Kernform besteht dabei aus zwei konzentrisch ineinander sitzenden Formteilen, von denen das äußere entsprechend der Innenkontur des Fittings stufenförmig abgesetzt ist.

Dieses äußere Formteil ist auf dem inneren Formteil axial verschiebbar geführt. Das innere Formteil weist eine der Innenkontur des Dichtungsringes entsprechende Umfangseinschnürung auf, welche bei vorgeschobenem äußeren Formteil vollständig abgedeckt ist. Bei der zurückgezogenen äußeren Form wird dagegen die der Innenkontur des Dichtungsringes entsprechende Umfangseinschnürung zumindest teilweise freigegeben.

Wesentliches Merkmal dieser bekannten Technik ist die Tatsache, daß der Fitting aus formfest aushärtendem Kunststoff und der Dichtungsring aus formelastisch aushärtendem Kunststoff in ein- und derselben Form gespritzt werden, wobei die beiden Kunststoffe an ihren Berührungsflächen miteinander verschweißen.

Als nachteilig ist dabei anzusehen, daß sowohl die Außenformteile wie auch die Teile der Kernform so lange in ihrem Sitz belassen bleiben müssen, bis die Formstabilität der verarbeiteten Kunststoffmaterialien eingetreten ist. Erst danach können die Werkzeugelemente entfernt und der Fitting mit dem angespritzten Dichtring entnommen werden.

Durch die EU-PS 0 036 454 ist eine weitere Möglichkeit bekannt geworden, einen Dichtungsring aus thermoplastischem Kunststoff an einen röhrenförmigen Körper anzuspritzen. Hierbei wird das thermoplastische Material des künftigen Dichtungsringes mit seinem Einspritzdruck als Ausformungsmittel für die Ringnut der Sicke verwendet. Auch in diesem Fall können die betreffenden Werkzeugteile von der Kombination Rohr-Sicke-eingespritzter Dichtring erst dann entfernt werden, wenn ein formstabiler Zustand der verwendeten Kunststoffmaterialien eingetreten ist.

Hier setzt die Erfindung ein, die es sich zur Aufgabe gestellt hat, ein Verfahren anzugeben, bei dem die formgebenden Werkzeugteile unmittelbar nach dem Einspritzen eines elastischen Dichtringmaterials in die Ringnut einer Umfangssicke noch vor dem Eintreten der Formstabilität des Dichtringmaterials entfernt werden können.

Erfindungsgemäß wird hierzu vorgeschlagen, daß auf den Außenumfang der Kernform vor deren Einbringen in die Verbindungsmuffe eine Hülle aus Polymer aufgebracht wird, welche die Abdichtung zur Ringnut bewirkt und während bzw. nach dem Entfernen der Kernform aus der Verbindungsmuffe in ihrer Ursprungslage als temporärer Muffeneinsatz verbleibt.

Der besondere Vorteil dieses Verfahrens wird darin gesehen, daß das elastische Material des Dichtrings in der durch die innere Kernform erzeugten Außenkontur des Dichtrings durch die Hülle so lange ohne Benutzung von Kernwerkzeugen gehalten wird, bis die Aushärtung des Dichtrings erfolgt ist. Zweckmäßigerweise wird ein elastisches Dichtmaterial verwendet, welches bei möglichst niedrigen Temperaturen aushärtet. Die Hülle bewirkt also eine wesentliche Beschleunigung und damit Verbilligung des Herstellungsprozesses, da eine längere Lagerung der erzeugten Kombination Muffe-Dichtring mit eingesetzten Werkzeugkernen entbehrlich wird. Die Festigkeit der Hülle ist dabei so eingestellt, daß die durch die innere Kernform hervorgerufene Außenkontur des Dichtringes bis zur Aushärtung und darüber hinaus erhalten bleibt.

Ein weiterer Vorteil des erfindungsgemäßen Verfahrens wird darin gesehen, daß die Hülle als Schutz des Dichtrings und der inneren Kontur der Muffe beispielsweise vor Verschmutzung, Beschädigung usw. während des Transportes, der Lagerung usw. der Fittinge oder Rohre wirkt. Die Hülle kann am Einsatzort einfach durch Überwindung des materialimmanenten Widerstandes aus ihrem Sitz in der Verbindungsmuffe entfernt werden. Nachdem vorteilhaft für die Hülle ebenfalls ein Polymermaterial verwendet wird. kann dieses kunststoffgerecht so eingestellt werden, daß eine entsprechende Formhaltefunktion bei leichter Entfernbarkeit am Einsatzort gewährleistet ist. Hierbei ist für die Hülle wesentlich, daß eine Verbindung zwischen dem Polymermaterial, aus dem sie selbst hergestellt ist, und dem elastomeren Material des Dichtringes nicht stattfindet. Die Hülle läßt sich sowohl von der außenliegenden Kontur des Dichtringes als auch vom inneren Umfang der Muffe abziehen.

Die Hülle deckt den inneren Umfang vom Muffenende bis über den muffenhalsseitigen Rand der Ringnut hinaus ab und sitzt dabei praktisch als Rohrkörper in dem Aufnahmeraum der Verbindungsmuffe. Zur besseren Halterung kann die Hülle mit ihren Stirnflächen das Muffenende halternd übergreifen.

Besonders vorteilhaft ist es auch, wenn die Hülle topfförmig mit einer zum Muffenhals gerichteten Abschlußwand ausgebildet ist. Auf diese Weise wird das gesamte Rohrinnere einschließlich des sensiblen Bereichs des Dichtrings durch die Hülle abgedeckt, so daß überhaupt keine Verschmutzung des Rohrinneren erfolgen kann.

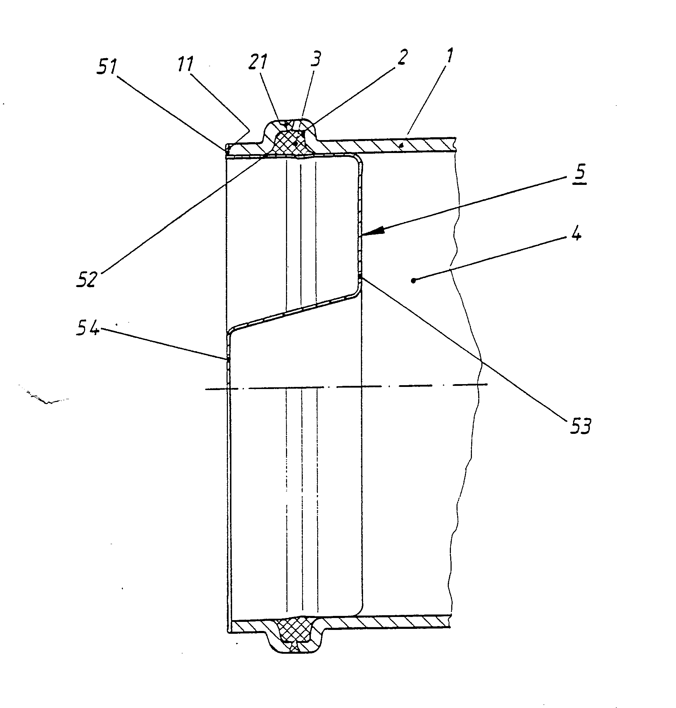

In der Zeichnung ist ein Ausführungsbeispiel der erfindungsgemäßen Verbindungsmuffe im Teilschnitt dargestellt. Die Verbindungsmuffe 1 besitzt eine Ringnut 2. in welche das elastomere Material des Dichtringes 3 eingespritzt ist. Die Einspritzöffnung 21 verläuft dabei divergierend von außen nach innen. was zu einer zusätzlichen Halterung des Dichtrings 3 in der Ringnut 2 führt.

In die Aufnahmeöffnung 4 der Verbindungsmuffe 1 ist die Hülle 5 eingesetzt. welche in der gezeigten Dartstellung topfförmig ausgebildet ist. Die Hülle 5 übergreift mit dem nach außen gerichteten Umfangsflansch 51 die Stirnfläche 11 in der Verbindungsmuffe 1. Die Seitenwand 52 der Hülle 5 liegt an den zugeordneten inneren Umfangsflächen der Verbindungsmuffe 1 entsprechend der eingestellten Flexibilität fest an. Im Bereich der Abdeckung des Dichtrings 3 besitzt die Seitenwand 52 die Umfangskontur, die der späteren Außenkontur des Dichtrings 3 entspricht und die ihr von dem in der Zeichnung nicht dargestellten inneren Kernteil verliehen worden ist.

Die Seitenwand 52 der Hülle 5 geht in das Bodenteil 53 über. Aus Verstärkungsgründen ist das Bodenteil 53 in der axialen Mitte zu einem Dom 54 aufgefaltet. der bis zum Niveau der vom Flansch 51 abgedeckten Stirnfläche 11 der Verbindungsmuffe 1 aufragen kann. Im unteren Bereich der Zeichnung ist die Rückführung des Domes 54 auf das Niveau des Hüllenbodens 53 nicht mehr dargestellt.

Die hier gezeigte Verstärkung der Hülle 5 durch den Dom 54 kann auch durch anders gestaltete Einsickungen des Hüllenbodens 53 erfolgen.

## Ansprüche

1. Verfahren zum Enspritzen eines elastischen Dichtungsmaterials in die Ringnut einer Verbindungsmuffe an Rohren oder Formteilen aus Polymeren. wobei die Ringnut mit Einspritz-und Entlüftungsöffnungen versehen ist und wobei vor dem Einspritzen des Dichtungsmaterials in die Ringnut eine die innere Kontur ces Dichtringes bestimmende. teilbare Kernform in die Verbindungsmuffe eingebracht wird. dadurch gekennzeichnet. daß auf den Außenumfang der Kernform vor deren Einbringen in die Verbindungsmuffe eine Hülle aus Polymer aufgebracht wird. welche die Abdichtung zur Ringnut bewirkt und während bzw. nach dem Entfernen der Kernform aus der Verbindungsmuffe in ihrer Ursprungslage als temporärer Muffeneinsatz verbleibt.

2. Verbindungsmuffe an Rohren oder Formteilen aus Polymeren mit in eine Ringnut eingespritztem Dichtring, dadurch gekennzeichnet. daß der innere Umfang vom Muffenende bis über den muffenhalsseitigen Rand der Ringnut (2) hinaus mit der Hülle (5) abgedeckt ist.

3. Verbindungsmuffe nach Anspruch 2. dadurch gekennzeichnet. daß die Hülle (5) die Stirnflächen (11) des Muffenendes halternd übergreift.

4. Verbindungsmuffe nach Anspruch 2. dadurch gekennzeichnet. daß die Hülle (5) topfförmig mit einer zum Muffennals gerichteten Abschlußwand (53) ausgebildet ist.